# EUROPEAN PATENT APPLICATION

(11) **EP 4 400 009 A1**
(43) Date of publication of application: **17.07.2024**
(21) Application number: 23151305.2
(22) Date of filing: 12.01.2023
(51) Int. Cl.: A47J 37/06, A47J 37/12

(54) **AIR FRYER FOOD SUPPORT**

(71) Applicant: Versuni Holding B.V., 5656 AE Eindhoven (NL)
(72) Inventor: VAUPOT, Jan, 5656 AE Eindhoven (NL); CATER, Matja, 5656 AE Eindhoven (NL)
(74) Representative: Vollering, Stefanus Franciscus Maria

(57) **Abstract**

Provided is an air fryer food support (110). The food support is for supporting food at least when the food is inside a cooking chamber (102) of an air fryer (100). The food support comprises a surface (112) for supporting the food thereon. The surface comprises a first recessed portion (114A) in which food is receivable, a second recessed portion (114B) in which food is receivable, and a raised portion (116) between the first recessed portion and the second recessed portion.

## Description

### FIELD OF THE INVENTION

This invention relates to an air fryer food support for supporting food in an air fryer's cooking chamber.

### BACKGROUND OF THE INVENTION

Stir frying in a wok is commonly used throughout the world, especially in Asia. Particular cooking equipment is needed in order to stir fry food in a wok. As well as the wok itself, a gas burner tends to be used to heat the wok from underneath the wok.

Air fryers are already common kitchen appliances but their popularity continues to grow. Air fryers may, for example, take the form of portable ovens which are designed to fit on a kitchen work surface.

Air fryers can be distinguished from, for example, convection ovens at least partly by the direction of air circulation through the cooking chamber. The air fryer's cooking chamber has, when orientated for use, a top and a bottom. A circulation system, e.g. in the form of a fan driven by a motor, is arranged to circulate air upwardly through food received in the cooking chamber in the direction of the top and/or downwardly through food received in the cooking chamber in the direction of the bottom.

By, for instance, mounting the air fryer's heating element proximal to the top of cooking chamber, air having passed upwardly through the food can be reheated by the heating element before being passed around a duct and being introduced back into the food at the bottom.

Such an arrangement has various advantages, particularly in terms of the frying effect which can be achieved with no or only a relatively small amount of cooking oil being required.

As well as this frying effect, various modifications have been proposed to enable air fryers to cook a more diverse range of foods and to achieve different cooking results.

Implementing certain cooking techniques, such as wok-style cooking, using an air fryer may nonetheless present technical challenges, particularly in terms of minimizing the risk of burning of the food and achieving a similar degree of browning on different sides of the food.

### SUMMARY OF THE INVENTION

The invention is defined by the claims.

According to examples in accordance with an aspect of the invention, there is provided an air fryer comprising: a cooking chamber that is at least partly delimited by a cooking chamber wall; a heating system; a circulation system for circulating air heated by the heating system; a food support for supporting food when the food is received inside the cooking chamber, the food support comprising a surface for supporting the food thereon, wherein said surface of the food support comprises: a first recessed portion in which food is receivable, a second recessed portion in which food is receivable, and a raised portion between the first recessed portion and the second recessed portion, the first recessed portion being defined by the surface extending downwardly from a first edge of the surface to a first bottom portion of the surface and upwardly from the first bottom portion to the raised portion, and the second recessed portion being defined by the surface extending downwardly from a second edge of the surface to a second bottom portion of the surface and upwardly from the second bottom portion to the raised portion, extension of the raised portion across the food support compartmentalizing the first recessed portion and the second recessed portion from each other.

It is desirable to turn over, in other words flip, food being cooked in an air fryer at one or more points during the cooking process in order to achieve a desired cooking result, for instance in order to achieve a similar degree of browning on different sides of the food. The user may attempt to turn over food by, for example, shaking a basket that defines the air fryer's cooking chamber. However, such shaking can often result in the food merely sliding around within the basket, rather than being turned over.

The present invention is partly based on the realization that by providing a food support whose food-supporting surface is shaped such that first and second recessed portions are partitioned from each other by a raised portion, food turning may be facilitated. This may be due to the raised portion providing an obstacle against which food can collide in order to be turned over.

It is noted that the compartmentalizing of the first recessed portion from the second recessed portion may, for instance, mean that transfer of food between the first and second recessed portions is restricted, due to the extension of the raised portion across the food support, to being upwardly from one of the first and second recessed portions, over the raised portion and then downwardly into the other of the first and second recessed portions.

In other words, transfer of food between the first and second recessed portions laterally around the raised portion may be precluded by the extension of the raised portion across the food support.

This can assist food turning, since food may be moved against the obstacle provided by the raised portion rather than being able to circumvent, e.g. by sliding laterally around, the raised portion.

Alternatively or additionally, the first recessed portion-raised portion-second recessed portion arrangement may mean that the surface spans a relatively large area. This may assist to increase transfer of heat to the food supported on the surface.

In some embodiments, the air fryer comprises an outer chamber wall, with the outer chamber wall being arranged around an outside of the cooking chamber wall, and a duct being defined between the outer chamber wall and the cooking chamber wall.

In such embodiments, the circulation system may be arranged to circulate at least part of the heated air around the duct, into and through the cooking chamber, and back into the duct.

In at least some embodiments, the duct is arranged to fluidly connect a top and a bottom of the cooking chamber to each other such that the circulating at least part of the heated air passing through the cooking chamber traverses a height of the cooking chamber.

In a first set of embodiments, the food support is mountable in the cooking chamber.

In this first set of embodiments, the food support may be removable from the cooking chamber, for example to facilitate loading of food onto and unloading of food from the surface of the food support, and (re-)mountable in the cooking chamber. The capability to remove the food support from the cooking chamber may also assist with cleaning of the food support after cooking.

In the first set of embodiments, the food support may comprise a fluid-permeable bottom. The aperture(s) of the fluid-permeable bottom may enable heated air circulated by the circulation system to pass therethrough.

In this manner, blocking of airflow by the food support when the food support is mounted in the cooking chamber can be avoided.

Alternatively or additionally, the food support may be mountable in the cooking chamber such that one or more gaps is or are provided between the food support and the cooking chamber wall.

Such gap(s) may assist to avoid blocking of airflow by the food support. A relatively high speed airflow along a periphery of the food support can be provided, which may assist with providing heat to the surface of the food support.

In a second set of embodiments, the food support is included in a bottom, e.g. a fluid-impermeable bottom, that partly delimits the cooking chamber.

More generally, the first recessed portion may be defined by the surface curvedly extending from the first edge down to the first bottom portion and up to the raised portion. Alternatively or additionally, the second recessed portion may be defined by the surface curvedly extending from the second edge down to the second bottom portion and up to the raised portion.

The wave-like, in other words undulating, surface provided due to the surface curvedly extending in this manner may assist to facilitate turning over of the food.

In some embodiments, the raised portion is centrally positioned between the first edge and the second edge.

The heated air delivered by the circulation system may be directed to a central part of the food support. By arranging the raised portion in such a central position, the heated air delivery may be focused on the raised portion. Since the heated air delivery is focused on the raised portion rather than the first and second recessed portions, the cooking of food received in the recessed portions may be better controlled.

In some embodiments, the air fryer comprises an air guiding element arranged to direct the heated air delivered thereto by the circulation system towards part of an underside of the food support that aligns with the raised portion of the surface, e.g. the centrally positioned raised portion of the surface.

In some embodiments, the surface delimits one or more apertures defining flow path(s) for the air circulated by the circulation system through the food support.

As well as assisting to avoid that the food support blocks airflow through the cooking chamber, such aperture(s) may assist with browning the food, since the aperture(s) assist to limit an amount of water, e.g. released from the food, that can collect on the surface.

In such embodiments, the surface may include a fluid-impermeable bottom region arranged beneath the one or more apertures, with the fluid-impermeable bottom region being included in the first recessed portion and/or the second recessed portion.

The fluid-impermeable bottom region may enable the food support to function similarly to a wok. Such a wok function may also be enhanced by the undulating surface provided by the surface curvedly extending from the first edge down to the first bottom portion and up to the raised portion and/or by the surface curvedly extending from the second edge down to the second bottom portion and up to the raised portion.

In some embodiments, the one or more apertures is or are delimited by a first sloping portion of the surface that extends between the first bottom portion and the raised portion and/or by a second sloping portion of the surface that extends between the second bottom portion and the raised portion.

A first dimension of the surface may be defined between respective opposite points of the first and second edges of the surface, with a second dimension of the surface extending transverse to the first dimension.

In some embodiments, the one or more apertures comprise one or more lines of apertures that extends or extend along the second dimension.

Such line(s) of apertures may assist to distribute heated air to the food received in the first and second recessed portions. This may lessen the risk of burning of the food relative to, for example, a single slit aperture whose length extends along the second dimension.

In some embodiments, the one or more lines of apertures comprise(s) a first line of apertures delimited by the first sloping portion.

Alternatively or additionally, the one or more lines of apertures comprise(s) a second line of apertures delimited by the second sloping portion.

In some embodiments, the food support comprises at least one lip member that overhangs a periphery of the surface.

The lip member(s) may assist to retain food, e.g. in the first recessed portion and/or the second recessed portion, during shaking of the food support.

As an alternative or in addition to the lip member(s), the food support may include a pouring spout.

Such a pouring spout may assist with pouring liquid from the food support, for example from the fluid-impermeable bottom region.

In some embodiments, the air fryer comprises a handle coupled to the cooking chamber wall and/or to the food support.

By moving the handle, food received on the surface of the food support may be turned over.

In some embodiments, the food support is pivotally coupled to the handle to enable changing of an orientation of the surface relative to the handle. Such pivotal coupling of the food support to the handle may assist in turning the food over.

In such embodiments, space in the cooking chamber and/or space between the food support and the outer chamber wall, that is arranged around an outside of the cooking chamber wall, may be provided to permit said changing of the orientation while at least part of the food support is supporting food inside the cooking chamber.

In some embodiments, the air fryer comprises a resilient pivot coupling that couples the food support to the handle. In such embodiments, the resilient pivot coupling allows changing of the orientation of the surface relative to the handle from an initial orientation, but with the resilience of the resilient pivot coupling causing subsequent reversion to the initial orientation.

The resilient pivot coupling may provide orientation adjustment of the food support relative to the handle that is particularly beneficial for food turning.

In some embodiments, the air fryer comprises a drawer that is slidable to provide access to the cooking chamber, with the food support being included or includable in the drawer.

For example, the handle may be arranged to facilitate sliding of the drawer, e.g. at the same time as enabling movement of the food support.

In some embodiments, sliding movement of the drawer may cause changing of the orientation of the surface relative to the handle from the initial orientation via pivoting of the resilient pivot coupling.

The food may thus be turned due to the combination of sliding of the drawer, the first recessed portion-raised portion-second recessed portion arrangement of the surface of the food support, and the changing of the orientation of the surface relative to the handle. This may provide particularly effective food turning.

In some embodiments, the air fryer comprises a basket that at least partly defines the cooking chamber. In such embodiments, the food support may be receivable in the basket. Alternatively, the food support and the basket may be interchangeably receivable within an outer chamber at least partly delimited by the outer chamber wall that is arranged around the outside of the cooking chamber wall.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
FIG. 1 schematically depicts an air fryer according to an example;
FIG. 2 provides a plan view showing a food support of the air fryer shown in FIG. 1;
FIG. 3 provides a schematic cross-sectional view that shows a food support according to an example;
FIG. 4 provides a schematic cross-sectional view that shows a food support according to another example;
FIG. 5 schematically depicts movement of a food support during horizontal sliding of a drawer of an air fryer according to an example;
FIG. 6A schematically depicts movement of a food support of an air fryer according to another example;
FIG. 6B provides more detailed schematic views of the movement of the food support shown in FIG. 6A;
FIG. 7 schematically depicts part of an air fryer comprising a food support that is mountable in a cooking chamber of the air fryer instead of a basket;
FIG. 8 schematically depicts part of an air fryer comprising a food support that is mountable in a basket;
FIG. 9 schematically depicts part of an air fryer comprising a food support attached to a cooking chamber wall;
FIG. 10 schematically depicts an air fryer comprising a food support that is mountable in a basket;
FIG. 11 schematically depicts an air fryer comprising a food support attached to a cooking chamber wall;
FIG. 12 schematically depicts an air fryer comprising a food support mounted in the air fryer's cooking chamber;
FIG. 13 schematically depicts an air fryer comprising a food support included in a bottom that partly delimits the air fryer's cooking chamber; and
FIG. 14 schematically depicts an air fryer comprising a food support that is mountable such that food is supportable by the food support and by a perforate base of a basket also received in the air fryer's cooking chamber.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Provided is an air fryer food support. The food support is for supporting food at least when the food is inside a cooking chamber of an air fryer. The food support comprises a surface for supporting the food thereon. The surface comprises a first recessed portion in which food is receivable, a second recessed portion in which food is receivable, and a raised portion between the first recessed portion and the second recessed portion.

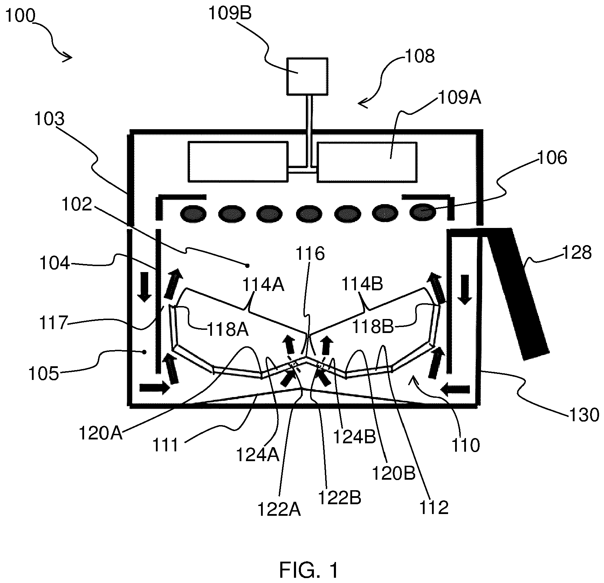

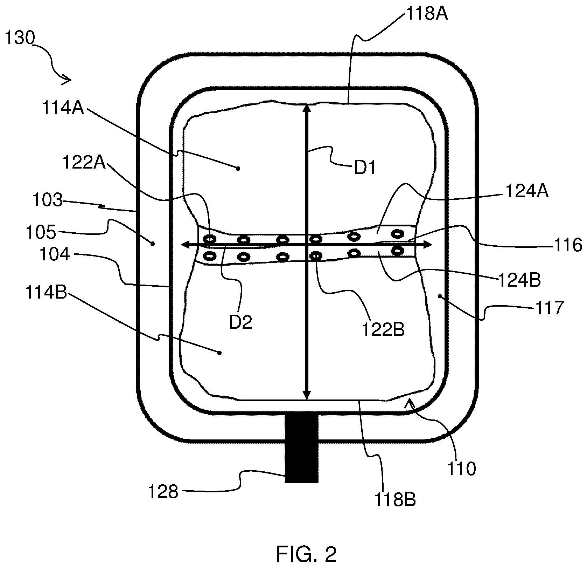

FIG. 1 schematically depicts an air fryer 100 according to an example. The air fryer 100 has a cooking chamber 102 that is at least partly delimited by a cooking chamber wall 104. In some embodiments, such as shown in FIGs. 1 and 2, the air fryer 100 further comprises an outer chamber wall 103.

The air fryer 100 may include a casing (not visible in the Figures), for example a plastic casing, in which the cooking chamber wall 104 is arranged. In embodiments in which the outer chamber wall 103 is included in the air fryer 100, the outer chamber wall 103 may also be received within the casing.

In some embodiments, such as shown in FIGs. 1 and 2, the outer chamber wall 103 is arranged around an outside of the cooking chamber wall 104, with a duct 105 being defined between the outer chamber wall 103 and the cooking chamber wall 104.

More generally, the air fryer 100 includes a heating system 106 and a circulation system 108 for circulating air heated by the heating system 106.

In some embodiments, such as shown in FIG. 1, the heating system 106 is arranged to irradiate food (not visible in FIG. 1) received in the cooking chamber 102, as well as heating air that is circulated by the circulation system 108.

The heating system 106 can have any suitable design. In some embodiments, the heating system 106 comprises a heating element, such as a resistive heating element. Particular mention is made of a spiral resistive heating element being included in the heating system 106. Air can, for example, be circulated by the circulation system 108 through space(s) between coils of such a spiral resistive heating element in order to heat the air. Such coils are schematically depicted in FIG. 1.

In at least some embodiments, the circulation system 108 comprises a fan 109A and a motor 109B, with rotation of the fan 109A by the motor 109B causing the circulating of air.

In some embodiments, such as shown in FIG. 1, the circulation system 108 is arranged to circulate at least part of the air heated by the heating system 106 around the duct 105, into and through the cooking chamber 102, and back into the duct 105.

In such embodiments, the duct 105 may be arranged to fluidly connect a top and a bottom of the cooking chamber 102 to each other such that the circulating at least part of the heated air passing through the cooking chamber 102 traverses a height of the cooking chamber 102.

In some embodiments, such as shown in FIG. 1, the heated air passes upwardly through the cooking chamber 102. Airflow around the duct 105 and upwardly through the cooking chamber 102 is represented by arrows in FIG. 1.

More generally, the cooking chamber 102 and the circulation system 108 may be arranged such that, when the air fryer 100 is orientated for use, at least part of the heated air traverses a height of the cooking chamber 102.

The traversing of the height of the cooking chamber 102 may mean that the at least part of the heated air passes upwardly and/or downwardly through the cooking chamber 102.

In other words, this traversing of the height of the cooking chamber 102 may mean upward and/or downward heated air circulation through the food received in the cooking chamber 102. This may assist to provide the frying effect provided by the air fryer 100.

The air fryer 100 comprises a food support 110 for supporting food at least when the food is received inside the cooking chamber 102.

In some embodiments, such as shown in FIG. 1, the air fryer 100 comprises an air guiding element 111 arranged to direct the heated air delivered thereto by the circulation system 108 towards the food support 110, for example towards an underside of the food support 110.

In embodiments in which the air fryer 100 includes the duct 105, the air guiding element 111 is preferably arranged in the duct 105, e.g. beneath the cooking chamber 102, as shown in FIG. 1.

The air guiding element 111 may, for example, comprise a so-called star-fish shape. The star-fish shape comprises a plurality of radial fins which are shaped to guide air in the duct 105 towards the food support 110, for example towards the underside of the food support 110.

The air guiding element 111 may guide air from the duct 105 towards the fan 109A and/or the heating element of the heating system 106. Additionally, the air guiding element 111 may direct air towards a center of the food support 110, as explained in more detail herein below.

The food support 110 has a surface 112, in other words an upper surface, on which the food is supportable. In some embodiments, such as shown in FIG. 1, the surface 112 is arranged to face the heating element of the heating system 106.

By the surface 112 of the food support 110 facing the heating element of the heating system 106, and the heated air being delivered, e.g. via the air guiding element 111, towards an underside of the food support 110, food supported on the surface 112 may be heated from beneath by the heated air and from above by radiation from the heating element.

Such heating from below and above may assist to avoid use of unhealthily high cooking temperatures often associated with traditional wok cooking in which the wok is exclusively heated from beneath the wok. Alternatively or additionally, cooking speeds may be increased, e.g. as determined from monitoring food browning levels over time.

As explained in more detail herein below, the surface 112 may be designed to alleviate the problem of excessive food moisture loss during cooking and/or inadequate heat transfer to food that can be associated with conventional air fryers when using standard cooking accessories, such as a basket with a mesh base, a grill accessory, etc.

The surface 112 comprises a first recessed portion 114A in which food is receivable, a second recessed portion 114B in which food is receivable, and a raised portion 116 between the first recessed portion 114A and the second recessed portion 114B.

In some embodiments, such as shown in FIGs. 1 to 4, one or more gaps 117 is or are provided between the food support 110 and the cooking chamber wall 104.

Such gap(s) 117 may assist to avoid blocking of airflow by the food support 110. A relatively high speed airflow along a periphery of the food support 110 can thus be provided, which may assist with providing heat to the surface 112 of the food support 110. Heat may be delivered to the surface 112 from underneath the food support 110 as well as from one or more side(s) at which the gap(s) 117 is or are provided.

Cooking times can be significantly reduced when such gap(s) 117 is or are provided, in other words compared to examples in which no such gaps 117 are provided.

In some embodiments, the food support 110 is heated from all directions: from underneath and at the side(s), and from above by radiation from the heating element of the heating system 106.

A distance across the gap(s) 117 may, for example, be 3 to 10 mm, such as about 5 mm.

Such a distance, which can be all around the food support 110 between the cooking chamber wall 104 and the food support 110, as best shown in FIG. 2, can assist to provide a relatively high speed airflow along the periphery of the food support 110, with concomitant enhancement of heat transfer to the surface 112 of the food support 110.

More generally, the first recessed portion 114A, as best shown in FIGs. 1, 3 and 4, is defined by the surface 112 extending downwardly from a first edge 118A of the surface 112 to a first bottom portion 120A of the surface 112 and upwardly from the first bottom portion 120A to the raised portion 116, with the second recessed portion 114B being similarly defined by the surface 112 extending downwardly from a second edge 118B of the surface 112 to a second bottom portion 120B of the surface 112 and upwardly from the second bottom portion 120B to the raised portion 116.

By providing a food support 110 whose food-supporting surface 112 is shaped such that first and second recessed portions 114A, 114B are partitioned from each other by such a raised portion 116, food turning may be facilitated. This may be due to the raised portion 116 providing an obstacle against which food can collide in order to be turned over.

Thus, the food support 110 can provide food turning-related advantages over conventional food supports employed in air fryers that do not include such a first recessed portion-raised portion-second recessed portion arrangement 114A, 116, 114B.

Alternatively or additionally, the first recessed portion-raised portion-second recessed portion arrangement 114A, 116, 114B may mean that the surface 112 spans a relatively large area. This may assist to increase transfer of heat to the food supported on the surface 112.

With reference to FIG. 2, the raised portion 116 extends across the food support 110 to compartmentalize the first recessed portion 114A and the second recessed portion 114B from each other.

The compartmentalizing may, for instance, mean that transfer of food between the first and second recessed portions 114A, 114B is restricted, due to the extension of the raised portion 116 across the food support 110, to being upwardly from one of the first and second recessed portions 114A, 114B, over the raised portion 116 and then downwardly into the other of the first and second recessed portions 114B, 114A.

In other words, transfer of food between the first and second recessed portions 114A, 114B laterally around the raised portion 116 may be precluded by the extension of the raised portion 116 across the food support 110.

This can assist food turning, since food may be moved against the obstacle provided by the raised portion 116 rather than being able to circumvent, e.g. by sliding laterally around, the raised portion 116.

In some embodiments, such as shown in FIG. 2, the raised portion 116 extends linearly, or substantially linearly, across the food support 110.

Alternatively, the raised portion 116 may extend non-linearly, for instance may curvedly extend, across the food support 110. In a non-limiting example, the raised portion 116 approximates an S-shape when the food support 110 is viewed in plan due to its curving extension across the food support 110.

The food support 110 can be formed from any suitable thermally robust and food-safe material. In some embodiments, the food support 110 comprises a metal alloy and/or a metal, such as aluminium. Such a metal alloy and/or metal may be shaped so as to define the shape of the food support 110.

Preferably, the food support 110 comprises a non-stick coating, such as a fluoropolymer coating. The non-stick coating may include the food-supporting surface 112 of the food support 110.

Such a non-stick coating may, for instance, be applied to the metal and/or metal alloy included in the food support 110.

In some embodiments, the food support 110 comprises aluminium to which a non-stick, e.g. fluoropolymer, coating is applied.

In such embodiments, the aluminium may assist to make food transfer to the food supported on the surface 112 of the food support 110 relatively rapid, while the non-stick coating may assist to prevent the food from sticking to the surface 112 and therefore assist to reduce the risk of the food being burned.

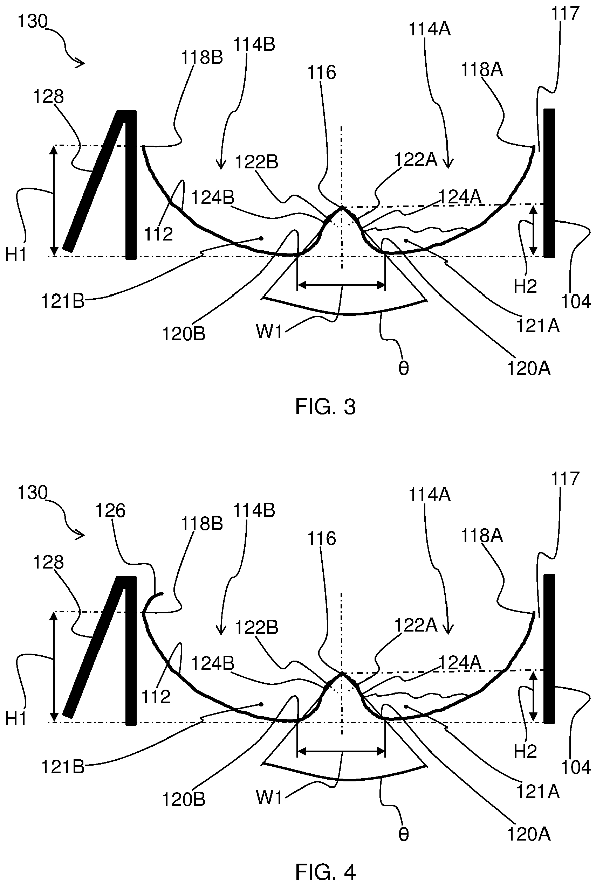

The food support 110 can have any suitable dimensions provided that the food support 110 is capable of supporting food at least when the food is received in the cooking chamber 102. In some embodiments, and referring to FIGs. 3 and 4, a height H1 of the food support 110, as measured from the lower of the first bottom portion 120A and the second bottom portion 120B of the surface 112 to the higher of the first edge 118A and the second edge 118B, is 60 to 100 mm, such as 80 mm.

Alternatively or additionally, a height H2 of the raised portion 116, as measured from the lower of the first bottom portion 120A and the second bottom portion 120B of the surface 112 to a highest part of the raised portion 116, may be 10 to 30 mm, such as 20 mm.

Alternatively or additionally, a width W1 measured between a point at which the surface 112 extends upwardly from the first bottom portion 120A towards the raised portion 116 to a point at which the surface 112 extends upwardly from the second bottom portion 120B towards the raised portion 116 may be 30 to 60 mm, such as 45 mm.

Alternatively or additionally, an angle θ between a first notional line drawn between the highest part of the raised portion 116 and the point at which the surface 112 extends upwardly from the first bottom portion 120A towards the raised portion 116, and a second notional line drawn between the highest part of the raised portion 116 and the point at which the surface 112 extends upwardly from the second bottom portion 120B towards the raised portion 116 is 90° or more.

Such an angle θ can assist food movement/transfer between the first recessed portion 114A and the second recessed portion 114B, over the raised portion 116, which can assist implementation of wok-style cooking using the food support 110.

In some embodiments, such as shown in FIGs. 1 to 4, the first recessed portion 114A may be defined by the surface 112 curvedly extending from the first edge 118A down to the first bottom portion 120A and up to the raised portion 116. Alternatively or additionally, the second recessed portion 114B may be defined by the surface 112 curvedly extending from the second edge 118B down to the second bottom portion 120B and up to the raised portion 116.

The wave-like, in other words undulating, surface 112 provided due to the surface 112 curvedly extending in this manner may assist to facilitate turning over of the food. Moreover, such a wave-like surface 112 may benefit from being relatively easy to clean.

The surface 112, or the food support 110 as a whole, may, for example, be regarded as having a generally concave shape. In some non-limiting examples, the surface 112, or the food support 110 as a whole, has a generally parabolic shape.

In some embodiments, such as shown in FIGs. 1 to 4, the raised portion 116 is centrally positioned between the first edge 118A and the second edge 118B.

The heated air delivered by the circulation system 108 may be directed to a central part of the food support 110, for example due to the arrangement of the air guiding element 111. By arranging the raised portion 116 in such a central position, the heated air delivery may be focused on the raised portion 116. Since the heated air delivery is focused on the raised portion 116 rather than the first and second recessed portions 114A, 114B, the cooking of food received in the recessed portions 114A, 114B may be better controlled.

In some embodiments, such as shown in FIGs. 1 to 4, the surface 112 delimits one or more apertures 122A, 122B defining flow path(s) for the air circulated by the circulation system 108 through the food support 110.

As well as assisting to avoid that the food support 110 blocks airflow through the cooking chamber 102, such aperture(s) 122A, 122B may assist with browning the food, since the aperture(s) assist to limit an amount of water, e.g. released from the food, that can collect on the surface 112.

It is noted that in some embodiments, such as shown in FIGs. 1 to 4, the aperture(s) 122A, 122B is or are provided in addition to the gap(s) 117 provided between the food support 110 and the cooking chamber wall 104.

The aperture(s) 122A, 122B can be formed in any suitable manner, for example by punching. In embodiments in which the food support 110 is relatively thin and comprises a relatively soft material, such as aluminium, the aperture(s) 122A, 122B can be advantageously formed by punching.

The aperture(s) 122A, 122B can have any suitable diameter. In some embodiments, the aperture(s) 122A, 122B each have a largest diameter of 2 to 8 mm, such as about 5 mm. In a non-limiting example, the aperture(s) 122A, 122B is or are formed by punching aluminium using a 5 mm punch.

The one or more apertures 122A, 122B are preferably centrally arranged between the first edge 118A and the second edge 118B, for example at or proximal to the raised portion 116.

In this way, the positioning of the aperture(s) 122A, 122B may assist heat delivery to the center of the surface 112, which can assist in delivering heat to the food supported thereon, particularly during turning the food over, e.g. during shaking/mixing of the food.

In some embodiments, and referring to FIGs. 3 and 4, the surface 112 may include a fluid-impermeable bottom region 121A, 121B arranged beneath the one or more apertures 122A, 122B, with the fluid-impermeable bottom region 121A, 121B being included in the first recessed portion 114A and/or the second recessed portion 114B.

The fluid-impermeable bottom region 121A, 121B may enable the food support 110 to function similarly to a wok. The fluid-impermeable bottom region 121A, 121B may enable at least part of the surface 112 to hold liquids, such as juices, water, marinade, oil, etc. During moving of solid food in and/or into the fluid-impermeable bottom region 121A, 121B, for instance during shaking of the food support 110, the solid food may be mixed with such liquid(s), which may contribute to a taste and/or appearance of the cooked food that resembles traditional wok-cooked food.

Such a wok function may also be enhanced by the undulating surface 112 provided by the surface 112 curvedly extending from the first edge 118A down to the first bottom portion 120A and up to the raised portion 116 and/or by the surface 112 curvedly extending from the second edge 118B down to the second bottom portion 120B and up to the raised portion 116.

In some embodiments, such as shown in FIGs. 3 and 4, a first fluid-impermeable bottom region 121A may be included in the first recessed portion 114A, and a second fluid-impermeable bottom region 121B may be included in the second recessed portion 114B.

In some embodiments, and with continued reference to FIGs. 3 and 4, the one or more apertures 122A, 122B is or are delimited by a first sloping portion 124A of the surface 112 that extends between the first bottom portion 120A and the raised portion 116 and/or by a second sloping portion 124B of the surface 112 that extends between the second bottom portion 120B and the raised portion 116.

As shown in FIG. 2, a first dimension D1 of the surface 112 may be defined between respective opposite points of the first and second edges 118A, 118B, with a second dimension D2 of the surface 112 extending transverse to the first dimension D1.

In such embodiments, the one or more apertures 122A, 122B may comprise one or more lines of apertures 122A, 122B that extends or extend along the second dimension D2.

Such line(s) of apertures 122A, 122B may assist to distribute heated air to the food received in the first and second recessed portions 114A, 144B. This may lessen the risk of burning of the food relative to, for example, a single slit aperture (not visible in the Figures) whose length extends along the second dimension D2. Testing with such a slit was found to result in an airflow jet therethrough which increased the risk of burning of food supported on the food support 110.

In some embodiments, the one or more lines of apertures 122A, 122B comprise(s) a first line of apertures 122A delimited by the first sloping portion 124A.

Alternatively or additionally, the one or more lines of apertures 122A, 122B comprise(s) a second line of apertures 122B delimited by the second sloping portion 124B.

In some embodiments, such as shown in FIG. 4, the food support 110 comprises at least one lip member 126 that overhangs a periphery of the surface 112.

The lip member(s) 126 may assist to retain food, e.g. in the first recessed portion 114A and/or the second recessed portion 114B, during shaking of the food support 110. Thus, the lip member(s) 126 can be regarded as anti-spillage member(s).

In particular, the lip member(s) 126 may assist to minimize the risk of food being accelerated out of the food support 110 during movement of the food support 110.

As an alternative or in addition to the lip member(s) 126, the food support 110 may include a pouring spout.

Such a pouring spout may assist with pouring liquid from the food support 110, for example from the fluid-impermeable bottom region 121A, 121B.

The pouring spout can, for example, take the form of a spilling edge.

In a non-limiting example, the food support 110 comprises a lip member 126 arranged to overhang a periphery of one of the first and second recessed portions 114A, 114B, and a pouring spout arranged to assist with pouring liquid from the other of the first and second recessed portions 114B, 114A.

In some embodiments, such as shown in FIGs. 1 to 4, the air fryer 100 comprises a handle 128 coupled to the cooking chamber wall 104 and/or to the food support 110. By moving the handle 128, food received on the surface 112 of the food support 110 may be turned over.

Alternatively or additionally, the air fryer 100 comprises a drawer 130 that is slidable to provide access to the cooking chamber 102, with the food support 110 being included or includable in the drawer 130.

The drawer 130 may be mounted in any suitable manner that enables the drawer 130 to slide, e.g. relative to the rest of the air fryer 100, to provide access to the cooking chamber 102 and to close the cooking chamber 102 again. In some embodiments, the drawer 130 is mounted on rails, with sliding of the drawer 130 on the rails in a first direction enabling the cooking chamber 102 to be accessed and sliding of the drawer 130 on the rails in a section direction opposite to the first direction enabling the cooking chamber 102 to be closed.

It is noted that the cooking chamber 102 may be accessed in other ways, such as via a moveable lid (not visible in the Figures) that can be moved, e.g. by lifting, to enable the cooking chamber 102 to be accessed. Such a moveable lid may, for example, be pivotally mounted so that pivoting of the lid enables the cooking chamber 102 to be accessed.

An advantage of the air fryer 100 comprising the drawer 130 is that sliding of the drawer 130 may assist, in combination with the first recessed portion-raised portion-second recessed portion arrangement 114A, 116, 114B of the surface 112 of the food support 110, in turning over food.

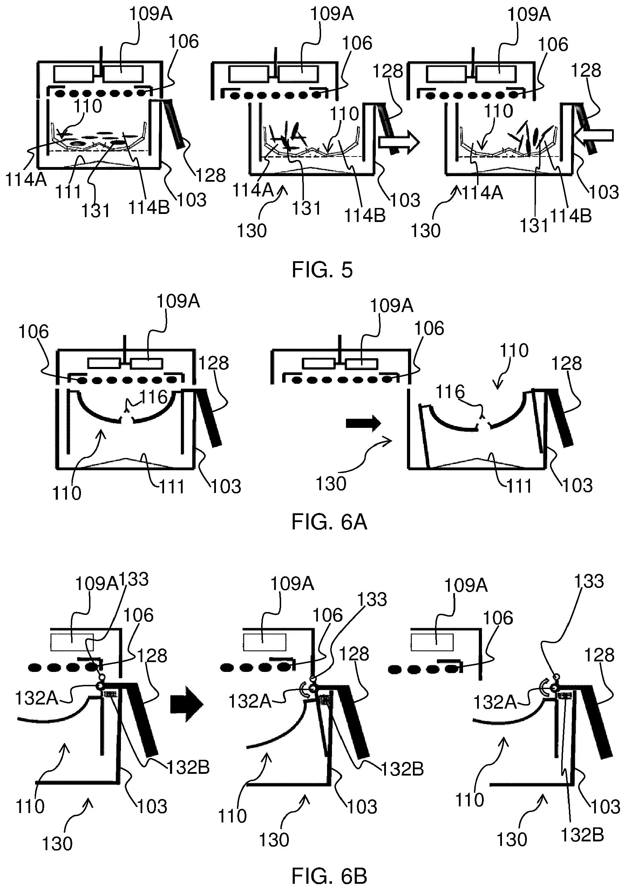

In some embodiments, and referring to FIGs. 1 and 5, the handle 128 is arranged to facilitate sliding of the drawer 130 and, at the same time, enabling movement of the food support 110.

As shown in the left hand pane of FIG. 5, prior to sliding of the drawer 130, food 131 in the cooking chamber 102 may be distributed on the surface 112 and received in each of the first and second recessed portions 114A, 114B. During horizontal pulling of the drawer 130 to access the cooking chamber 102, as shown in the middle pane of FIG. 5, at least some of the food 131 that was originally in the second recessed portion 114B may be transferred, over the raised portion 116, into the first recessed portion 114A. During horizontal pushing of the drawer 130 to close the cooking chamber 102, as shown in the right hand pane of FIG. 5, at least some of the food 131 that was in the first recessed portion 114A may be transferred, over the raised portion 116, into the second recessed portion 114B.

This movement of food 131 between the first and second recessed portions 114A, 114B caused by sliding of the drawer 130 may result in the food 131 being turned over. This is because the food 131 is flipped, in other words "kicked back", when passing over the crest of the surface 112 provided by the raised portion 116.

Such food turning may thus be implemented in a relatively straightforward manner via sliding of the drawer 130, without the food support 110 needing to be removed/separated from the drawer 130.

It is noted that inclusion of the lip member(s) 126 that overhang(s) a periphery of the surface 112 may be particularly beneficial when the air fryer 100 includes the drawer 130 whose sliding movement concomitantly enables movement of the food support 110.

This is because the lip member(s) 126 may assist to minimize the risk of the food 131 being accelerated out of the food support 110 during sliding of the drawer 130.

As an alternative or in addition to the air fryer 100 comprising the drawer 130, the food support 110 may be pivotally coupled to the handle 128 to enable changing of an orientation of the surface 112 relative to the handle 128. An example of this is schematically depicted in FIGs. 6A and 6B.

Such pivotal coupling of, e.g. via a rotational joint between, the food support 110 and the handle 128 may assist in turning over the food 131.

In such embodiments, space in the cooking chamber 102 and/or space between the food support 110 and the outer chamber wall 103, that is arranged around the outside of the cooking chamber wall 104, may be provided to permit said changing of the orientation while at least part of the food support 110 is supporting food 131 inside the cooking chamber 102.

The changing of the orientation may comprise changing of an angle, in other words tilting, of the food support 110 such that one of the first and second edges 118A, 118B of the surface 112 becomes elevated relative to the other of the first and second edges 118B, 118A. An example of this is illustrated in the right hand pane of FIG. 6A.

In some embodiments, such as shown in FIG. 6B, the air fryer 100 comprises a resilient pivot coupling 132A, 132B that couples the food support 110 to the handle 128. In such embodiments, the resilient pivot coupling 132A, 132B allows changing of the orientation of the surface 112 relative to the handle 128 from an initial orientation, but with the resilience of the resilient pivot coupling 132A, 132B causing subsequent reversion to the initial orientation. The resilient pivot coupling 132A, 132B may provide orientation adjustment of the food support 110 relative to the handle 128 that is particularly beneficial for food turning.

The resilient pivot coupling 132A, 132B may include a pivot 132A, for example a pivot 132A comprising a bearing, and a resilient member 132B for biasing the orientation of the surface 112 relative to the handle 128 to the initial orientation.

Any suitable type of resilient member 132B can be employed. In some embodiments, such as shown in FIG. 6B, the resilient member 132B comprises, e.g. is in the form of, a spring arranged between a side of the food support 110 and the outer chamber wall 103. Such a spring may, for instance, be a helical spring, as shown in FIG. 6B.

Alternatively, the resilient member 132B may comprise, e.g. be defined by, a torsion spring, such as a spiral spring. Such a torsion spring may be arranged to twist about the rotational axis of the pivot 132A.

In some embodiments, such as shown in FIGs. 6A and 6B, sliding movement of the drawer 130 may cause changing of the orientation of the surface 112 relative to the handle 128 from the initial orientation via pivoting of the resilient pivot coupling 132A, 132B, with the resilience of the resilient pivot coupling 132A, 132B causing subsequent reversion to the initial orientation.

The food 131 may thus be turned due to the combination of sliding of the drawer 130, the first recessed portion-raised portion-second recessed portion arrangement 114A, 116, 114B of the surface 112 of the food support 110, and the changing of the orientation of the surface 112 relative to the handle 128. This may provide particularly effective food turning.

In some embodiments, such as shown in FIG. 6B, the drawer 130 comprises an orientation adjustment element 133, e.g. comprising a wheel or gear, configured to cause the orientation of the food support 110 to change during sliding of the drawer 130 to access and/or close the cooking chamber 102.

The orientation adjustment element 133, e.g. wheel or gear, may be mounted to the food support 110 via a lever that connects the food support 110 to the pivot 132A.

In such embodiments, the orientation adjustment element 133, e.g. wheel or gear, may be engaged by a portion of the air fryer 100 adjacent the drawer 130 during sliding of the drawer 130 to access and/or close the cooking chamber 102, with this engagement causing the orientation of the food support 110 to change.

It is noted that this engagement of the orientation adjustment element 133 is schematically depicted in the middle pane of FIG. 6B.

The portion of the air fryer 100 that engages the orientation adjustment element 133 may, for example, be a fixed lever included in, or mounted to, the casing of the air fryer 100.

The food support 110 may revert to its initial orientation following sliding of the drawer 130 beyond the portion of the air fryer 100 that engages the orientation adjustment element 133 so that the orientation adjustment element 133 is no longer engaged by the portion. This is illustrated in the far right hand pane of FIG. 6B.

More generally, the food support 110 may be provided in the air fryer 100 in various ways. In a first set of embodiments, such as shown in FIGs. 1 to 12 and 14, the food support 110 is mountable in the cooking chamber 102.

In this first set of embodiments, the food support 110 may be removable from the cooking chamber 102, for example to facilitate loading of food 131 onto and/or unloading of food 131 from the surface 112 of the food support 110, and then (re-)mountable in the cooking chamber 102.

The capability to remove the food support 110 from the cooking chamber 102 may assist with cleaning of the food support 110 after cooking.

In some embodiments, such as shown in FIGs. 5, 7, 8 and 10, the air fryer 100 comprises a basket 134 that at least partly defines the cooking chamber 102.

The frame of the basket 134 may at least partly define the cooking chamber wall 104, e.g. with the duct 105 being defined between the frame and the outer chamber wall 103.

The food support 110 may be supported, e.g. integrated into, the frame of the basket 134 as an alternative or in addition to a fluid-permeable base 135, e.g. mesh base, of the basket 134.

In some embodiments, such as shown in FIGs. 5, 8, 10 and 14, the food support 110 may be receivable in the basket 134.

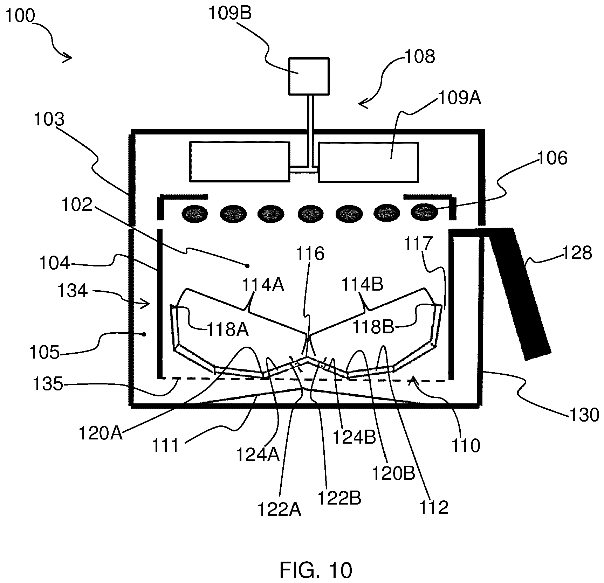

In some embodiments, such as shown in FIGs. 5 and 10, the food support 110 is supportable on the fluid-permeable base 135, e.g. mesh base, of the basket 134. In such embodiments, food 131 may be supported on the surface 112 of the food support 110, with the food support 110 itself being supported by the fluid-permeable base 135.

When the food support 110 is supportable on the fluid-permeable base 135 of the basket 134, no fasteners may be required to secure the food support 110 inside the cooking chamber 102.

Alternatively or additionally, the food support 110, when received in the basket 134 and supported on the fluid-permeable base 135, may occupy the volume, e.g. the whole volume, of the basket 134.

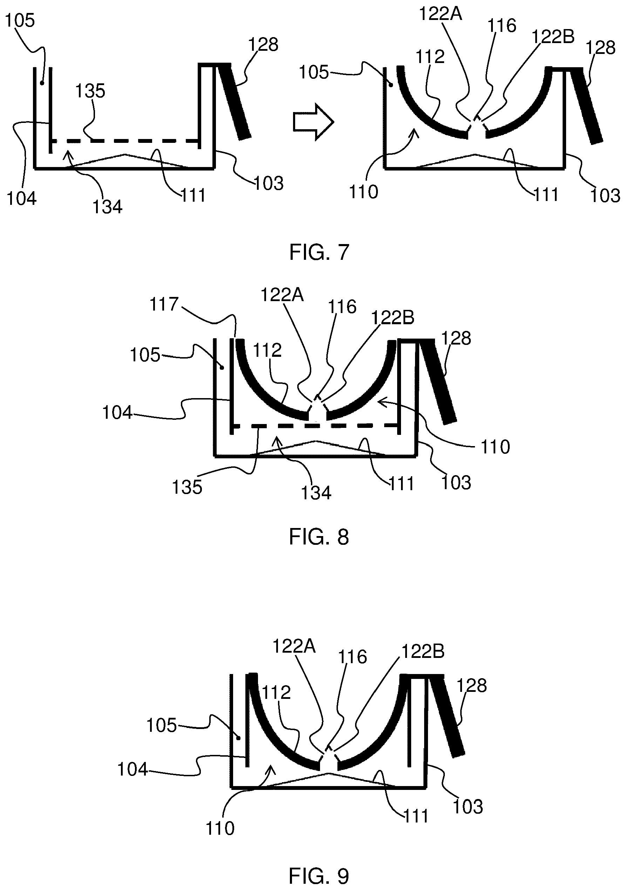

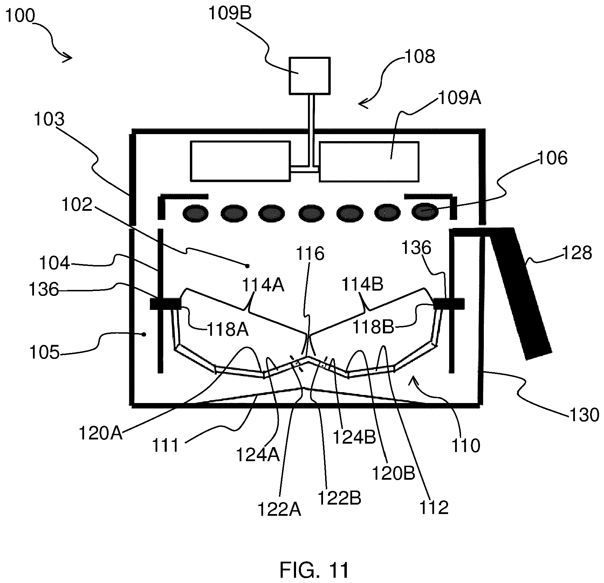

As an alternative or in addition to the food support 110 being supportable on the fluid-permeable base 135 of the basket 134, the food support 110 may be supportable by the frame of the basket 134, as illustrated in the case of the non-limiting examples shown in FIGs. 8 and 11.

In such embodiments, and as shown in FIG. 11, the air fryer 100 may include fastener(s) 136 for securing, e.g. releasably securing, the food support 110 to the frame of the basket 134.

The food support 110 may be detachably securable to the frame of the basket 134. The fluid-permeable base 135 may also be detachable securable to the frame of the basket 134.

Thus, the air fryer 100 may be switchable between a first cooking configuration in which the fluid-permeable base 135 is secured to the frame, and a second cooking configuration in which the food support 110 is secured to the frame instead of the fluid-permeable base 135.

For example, replacement of the fluid-permeable base 135, e.g. mesh base, with the food support 110 may comprise detaching the fluid-permeable base 135 followed by attaching, e.g. "clicking in", the food support 110.

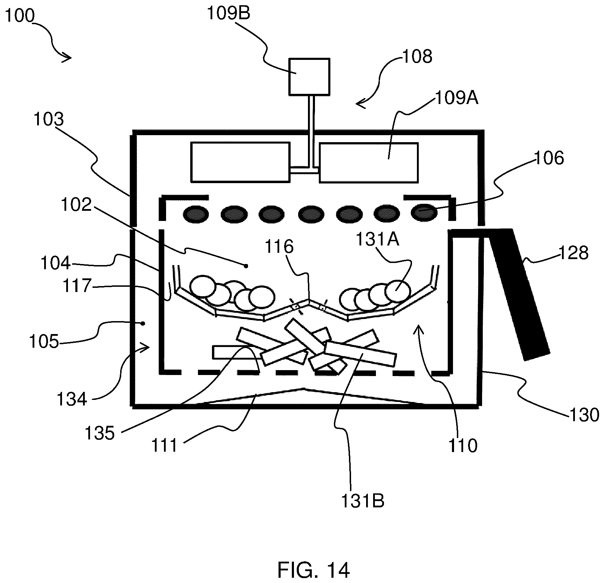

In some embodiments, such as shown in FIG. 14, the frame of the basket 134 is configured to support both the food support 110 and the fluid-permeable base 135 of the basket such that food 131A is supportable on the surface 112 of the food support 110 while food 131B is supportable on the fluid-permeable base 135.

In such embodiments, a first food-receiving zone may be defined in the cooking chamber 102 between the fluid-permeable base 135 and the underside of the food support 110, with a second food-receiving zone being defined above the food support 110.

The second food-receiving zone may, for example, include the fluid-impermeable bottom region(s) 121A, 121B.

The second food-receiving zone defined above the food support 110 may be exposed to the radiation provided by the heating element of the heating system 106.

Such a second food-receiving zone may thus be particularly appropriate for cooking certain types of food 131A, such as bell peppers, meat, fish, etc.

The "double layer cooking" implementable using the first and second food-receiving zones may assist to bring more variety in food preparation. For example, vegetables and/or pasta may be cooked on the food support 110, while meat balls are cooked on the fluid-permeable base 135, e.g. mesh base, of the basket 134.

In another illustrative example, meat is cooked on the food support 110, while fries are cooked on the fluid-permeable base 135 of the basket 134.

By the frame of the basket 134 supporting both the food support 110 and the fluid-permeable base 135, shaking of the frame, e.g. via the handle 128 attached to the frame, may enable flipping of food, e.g. meat, supported on the food support 110 at the same time as flipping/shaking of food, e.g. fries, supported on the fluid-permeable base 135. In other words, the flipping of food, e.g. meat, on the food support 110 may be synchronized with flipping/shaking of food, e.g. fries, supported on the fluid-permeable base 135.

With such "double layer cooking", wok-type cooking using the food support 110 may be implementable at the same time as, for example, baking in the first food receiving zone between the fluid-permeable base 135 and the underside of the food support 110.

In alternative embodiments, such as shown in FIG. 7, the food support 110 and the basket 134 may be interchangeably receivable within the outer chamber at least partly delimited by the outer chamber wall 103.

In such embodiments, the food support 110 may be attachable to the air fryer's 100 handle 128 instead of to the basket 134.

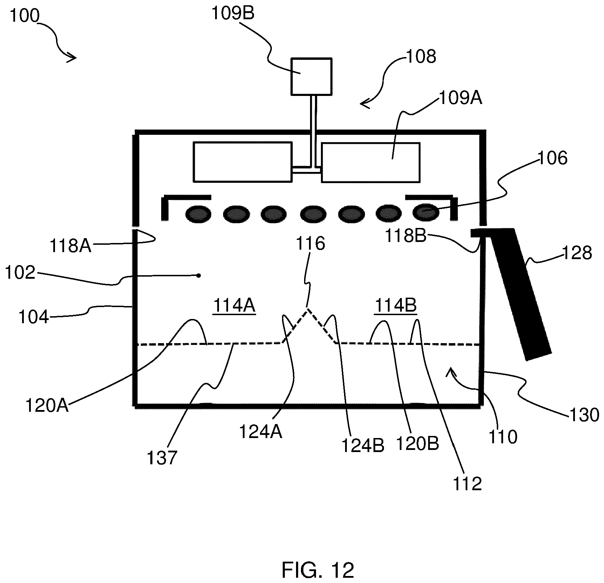

In the first set of embodiments, and referring to the non-limiting example shown in FIG. 12, the food support 110 may comprise a fluid-permeable bottom 137. The aperture(s) of the fluid-permeable bottom 137 may enable heated air circulated by the circulation system 108 to pass therethrough.

In this manner, blocking of airflow by the food support 110 when the food support 110 is mounted in the cooking chamber 102 can be avoided, as previously mentioned in relation to the aperture(s) 122A, 122B delimited by the surface 112 of the food support 110 shown in FIGs. 1 to 4.

The fluid-permeable bottom 137 may be an insert that is insertable into the cooking chamber 102. The basket 134 may be omitted in such embodiments. Rather than being attached to the basket 134, the handle 128 may be attached to the cooking chamber wall 104, as shown in FIG. 12.

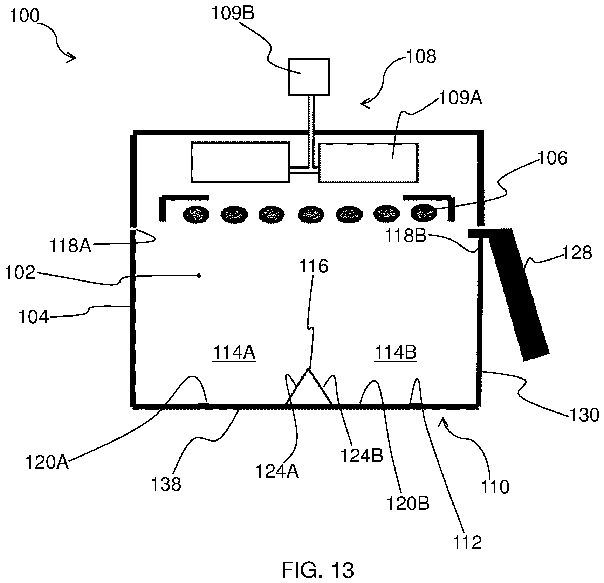

In a second set of embodiments, and referring to FIG. 13, the food support 110 is included in a bottom 138, e.g. a fluid-impermeable bottom 138, that partly delimits the cooking chamber 102.

In such embodiments, the air guiding element 111 may be omitted so that the raised portion 116 can protrude from the surface 112 of the food support 110 that is included in the bottom 138 of the cooking chamber 102.

Rather than being attached to the basket 134, the handle 128 may be attached to the cooking chamber wall 104, as shown in FIG. 13.

It is noted that the food turning benefits of the food support 110 according to the present disclosure may be particularly helpful in the embodiments shown in FIGs. 12 and 13 in which no duct 105 is provided in the air fryer 100, and accordingly little or no heated air may reach the underside of the food 131 being cooked in the cooking chamber 102. The capability to easily and effectively turn the food 131 may assist to compensate for the lack of heated air reaching the underside of the food 131 (when the food 131 is not in the process of being turned).

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

## Claims

1. An air fryer (100) comprising:
a cooking chamber (102) that is at least partly delimited by a cooking chamber wall (104);
a heating system (106);
a circulation system (108) for circulating air heated by the heating system;
a food support (110) for supporting food when the food is received inside the cooking chamber, the food support comprising a surface (112) for supporting the food thereon, wherein said surface of the food support comprises:
a first recessed portion (114A) in which food is receivable,
a second recessed portion (114B) in which food is receivable, and a
raised portion (116) between the first recessed portion and the second recessed portion, the first recessed portion being defined by the surface extending downwardly from a first edge (118A) of the surface to a first bottom portion (120A) of the surface and upwardly from the first bottom portion to the raised portion, and the second recessed portion being defined by the surface extending downwardly from a second edge (118B) of the surface to a second bottom portion (120B) of the surface and upwardly from the second bottom portion to the raised portion, extension of the raised portion across the food support compartmentalizing the first recessed portion and the second recessed portion from each other.

2. The air fryer (100) according to claim 1, comprising an outer chamber wall (103), the outer chamber wall being arranged around an outside of the cooking chamber wall (104), a duct (105) being defined between the outer chamber wall and the cooking chamber wall, wherein the circulation system (108) is arranged to circulate at least part of the heated air around the duct, into and through the cooking chamber (102), and back into the duct, the duct being arranged to fluidly connect a top and a bottom of the cooking chamber to each other such that the circulating at least part of the heated air passing through the cooking chamber traverses a height of the cooking chamber.

3. The air fryer (100) according to claim 1 or claim 2, wherein the food support (110) is mountable in the cooking chamber (102), wherein the food support comprises a fluid-permeable bottom (137) and/or the food support is mountable in the cooking chamber such that one or more gaps (117) is or are provided between the food support and the cooking chamber wall (104).

4. The air fryer (100) according to claim 1, wherein the food support (110) is included in a bottom (138) that partly delimits the cooking chamber (102).

5. The air fryer (100) according to any one of claims 1 to 4, wherein the first recessed portion (114A) is defined by the surface (112) curvedly extending from the first edge (118A) down to the first bottom portion (120A) and up to the raised portion (116); and/or wherein the second recessed portion (114B) is defined by the surface curvedly extending from the second edge (118B) down to the second bottom portion (120B) and up to the raised portion.

6. The air fryer (100) according to any one of claims 1 to 5, wherein the raised portion (116) is centrally positioned between the first edge (118A) and the second edge (118B).

7. The air fryer (100) according to any one of claims 1 to 6, wherein the surface (112) delimits one or more apertures (122A, 122B) defining flow path(s) for the air circulated by the circulation system (108) through the food support (110); optionally wherein the surface (112) comprises a fluid-impermeable bottom region (121A, 121B) arranged beneath the one or more apertures, the fluid-impermeable bottom region being included in the first recessed portion (114A) and/or the second recessed portion (114B).

8. The air fryer (100) according to claim 7, wherein the one or more apertures (122A, 122B) is or are delimited by a first sloping portion (124A) of the surface (112) that extends between the first bottom portion (120A) and the raised portion (116) and/or by a second sloping portion (124B) of the surface that extends between the second bottom portion (120B) and the raised portion.

9. The air fryer (100) according to claim 7 or claim 8, wherein the surface (112) has a first dimension (D1) defined between respective opposite points of the first and second edges (118A, 118B), and a second dimension (D2) that extends transverse to the first dimension, and wherein the one or more apertures (122A, 122B) comprise one or more lines of apertures extending along the second dimension.

10. The air fryer (100) according to claim 9 when dependent from claim 8, wherein the one or more lines of apertures (122A, 122B) comprise(s) a first line of apertures (122A) delimited by the first sloping portion (124A) and/or a second line of apertures (122B) delimited by the second sloping portion (124B).

11. The air fryer (100) according to any one of claims 1 to 10, wherein the food support (110) comprises at least one lip member (126) that overhangs a periphery of the surface (112).

12. The air fryer (100) according to any one of claims 1 to 11, comprising a handle (128) coupled to the cooking chamber wall (104) and/or to the food support (110).

13. The air fryer (100) according to claim 12, wherein the food support (110) is pivotally coupled to the handle (128) to enable changing of an orientation of the surface (112) relative to the handle; optionally wherein space in the cooking chamber (102) and/or space between the food support and an outer chamber wall (103) is provided to permit said changing of the orientation while at least part of the food support is supporting food inside the cooking chamber (102).

14. The air fryer (100) according to any one of claims 1 to 13, comprising a drawer (130) that is slidable to provide access to the cooking chamber (102), the food support (110) being included or includable in the drawer.

15. The air fryer (100) according to any one of claims 1 to 14, comprising a basket (134) that at least partly defines the cooking chamber (102), wherein the food support (110) is receivable in the basket; or wherein the food support and the basket are interchangeably receivable within an outer chamber of the air fryer.
